# EUROPÄISCHE PATENTANMELDUNG

(11) **EP 1 529 890 A2**
(43) Veröffentlichungstag der Anmeldung: **11.05.2005**
(21) Anmeldenummer: 04405136.5
(22) Anmeldetag: 09.03.2004
(51) Int. Cl.: E04B 1/76, E04B 1/70, F24F 5/00

(54) **Anordnung und Verfahren zur Temperierung sowie Be-und Entlüftung von Innenräumen**

(30) Priorität: 09.11.2003 WO PCT/EP03/12470; 27.01.2004 WO PCT/CH20/04000043
(71) Anmelder: Terraglobe (Europe) GmbH, 8424 Embrach (CH)
(72) Erfinder: Kupferschmid, Heinz, 8185 Winkel bei Bülach (CH); Holzapfel, Martin, 8038 Zürich (CH)
(74) Vertreter: Dr. Graf & Partner

(57) **Zusammenfassung**

Die Anordnung zur Temperierung sowie Be- und Entlüftung von Innenräumen (6) eines Hauses (5) mittels temperierter Luft umfasst eine Temperierfläche (4) hinter welcher ein Fluid leitender Hohlraum (8) ausgebildet ist, wobei der Fluid leitende Hohlraum (8) zumindest eine Eintrittsöffnung (8a) sowie zumindest eine Austrittsöffnung (8b) für die temperierte Luft aufweist und ansonst abgedichtet ausgestaltet ist, um die durch die Eintrittsöffnung (8a), den Fluid leitenden Hohlraum und die Austrittsöffnung (8b) strömende temperierte Luft derart zu leiten, dass die Temperatur der Temperierfläche (4) beeinflusst wird, wobei die Austrittsöffnung (8b) in den Innenraum (6) mündet.

## Beschreibung

Die Erfindung betrifft eine Anordnung zur Temperierung sowie Be- und Entlüftung von Innenräumen gemäss dem Oberbegriff von Anspruch 1. Die Erfindung betrifft weiter ein Verfahren zur Temperierung sowie Be- und Entlüftung von Innenräumen gemäss dem Oberbegriff von Anspruch 9.

Neu erstellte oder sanierte Häuser weisen auf Grund von behördlichen Vorschriften wie Wärmeschutzverordnungen einen geringen Wärmebedarf auf. Der geringe Wärmebedarf wird im wesentlichen durch eine gute thermische Isolation der Aussenhülle sowie eine luftdichte Bauweise erreicht. So beträgt der Wärmebedarf von sogenannten Niedrigenergiehäusern nur noch 3 Liter Heizöl pro Quadratmeter Wohnfläche pro Jahr, was dank dichter Gebäudehülle und dicht schliessenden Fenstern möglich ist.

Nachteilig an wärmeenergetisch optimierten Häusern ist die Tatsache, dass diese auf Grund der hohen Dichtigkeit eine ungenügende natürliche Belüftung aufweisen. Dies vermindert einerseits den Wohnkomfort, indem die Raumluft bei ungenügender Belüftung stickig, belastend oder sogar gesundheitsschädlich wird, und gefährdet andererseits die Bausubstanz, indem Feuchtebauschäden und Schimmelpilzbefall auftreten. Den mit der ungenügenden Belüftung zusammenhängenden Problemen wurde bis heute zu wenig Rechnung getragen. Zudem weisen vor wenigen Jahren energietechnisch sanierte Häuser bereits wieder einen Sanierungsbedarf auf, um Feuchtebauschäden zu beheben.

Es ist daher Aufgabe der vorliegenden Erfindung eine Anordnung sowie ein Verfahren vorzuschlagen, die es erlauben vorteilhafter Häuser mit geringem Energiebedarf zu bilden, wobei die Anordnung und das Verfahren insbesondere sehr kostengünstig und zuverlässig sind.

Diese Aufgabe wird gelöst mit einer Anordnung zur Temperierung sowie Be- und Entlüftung von Innenräumen eines Hauses mittels temperierter Luft, wobei die Innenräume eine als Wand und/oder Boden und/oder Decke ausgestaltete Temperierfläche aufweisen, hinter welcher ein Fluid leitender Hohlraum ausgebildet ist, wobei der Fluid leitende Hohlraum zumindest eine Eintrittsöffnung sowie zumindest eine Austrittsöffnung für die temperierte Luft aufweist und ansonst insbesondere dampfdiffusionsdicht abgedichtet ausgestaltet ist, um die durch die Eintrittsöffnung, den Fluid leitenden Hohlraum und die Austrittsöffnung strömende temperierte Luft derart zu leiten, dass die Temperatur der Temperierfläche beeinflusst wird, und wobei die Austrittsöffnung in den Innenraum mündet.

Die erfindungsgemässe Anordnung weist bei Neubauten den Vorteil auf, dass die Hohlräume sehr kostengünstig erstellbar sind, dass die Zuleitung von temperierter Luft in die Hohlräume ebenfalls sehr kostengünstig erfolgen kann, dass die erwärmten Wände ein angenehmes Raumklima zur Folge haben, und dass die Räume zudem eine Zwangsbelüftung erfahren, sodass die erfindungsgemässe Anordnung insbesondere auch für Häuser in luftdichter Bauweise geeignet sind. Die Belüftung der Hohlräume gewährleistet zudem, dass diese kondenswasserfrei bleiben. Die erfindungsgemässe Anordnung ist jedoch auch zur Kühlung von Innenräumen geeignet, indem gekühlte Luft den Hohlräumen zugeführt wird.
Die erfindungsgemässe Anordnung ist jedoch auch zur Sanierung bestehender Häuser geeignet, indem an den bestehenden Aussenwänden die Temperierflächen mit Hohlräumen angebracht werden. Zur Sanierung bestehender Häuser sind insbesondere speziell angepasste Sanierungsmittel wie Sanierungsbausteine geeignet, welche in einem Verbund angeordnet die erfindungsgemässe Anordnung ausbilden.

Die Temperierflächen können aus einer Vielzahl von Materialien, beispielsweise aus Material der Gruppe Stein, Beton, Porenbeton, Blähton, Holz, Karton, Gips, Keramik oder Kunststoff gebildet sein.

Die Erfindung wird insbesondere auch gelöst mit einem Verfahren zur Temperierung sowie Be- und Entlüftung von Innenräumen eines Hauses mittels temperierter Luft indem die Luft erwärmt und/ oder gekühlt wird, indem diese temperierte Luft einem abgedichteten Hohlraum zugeführt und im Hohlraum über eine Temperierfläche geleitet wird, welche eine Wand und/oder Boden und/oder Decke des Innenraumes bildet, und indem die gesamte temperierte Luft danach in den Innenraum geleitet wird.

Die Erfindung betrifft insbesondere auch ein Verfahren zur Herstellung eines Thermobausteines, als thermodynamischer Baudämmstein, mit frei wählbaren, variablen Luftleitkanälen und Luftebenen, zur Fertigstellung eines Lebenserhaltungssystems für Innenräume, bei gleichzeitiger tauwasserfreier Fixierschicht im Bauteilquerschnitt.

Der Thermobaustein, als Baudämmstein, der auch der Patentanmeldung zu Grunde liegt, wird so produziert, dass er thermodynamisch einsetzbar ist, wobei die Menge der Luftaufnahme für den Luftaustausch, im Bauteilquerschnitt, je nach Gebäudenutzung variabel ist, und die Temperierung der Luft im Bauteilquerschnitt frei wählbar ist. Bei der Verarbeitung des erfindungsgemässen Steines entsteht bereits die fertige äußere Gebäudehülle, wobei die Haustechnik zum Temperieren und Klimatisieren im Bauteilquerschnitt eines jeden Thermobausteines werkseitig eingebaut ist, was zu einer erheblichen Kostenreduzierung beim Bauen führt.

Ein weiterer Vorteil ist, dass beim Bauen selbst die Kanäle und Luftebenen entstehen und damit die Außenwand als Klimahülle eines Gebäudes fertig ist.

Die Erfindung wird nachfolgend an Hand mehrerer Ausführungsbeispiele im Detail beschrieben. Es zeigen:
- Figur 1: eine schematische Detailansicht eines Fluid leitenden Hohlraumes;
- Figur 2: schematisch eine erfindungsgemässe Anordnung mit Fluid leitendem Hohlraum sowie Eintritts- und Austrittsöffnungen;
- Figur 3: ein Längsschnitt durch die Aussenwand eines Hauses mit tragender Struktur und Aussenisolation, Innenwand und dazwischen angeordnetem Fluid leitendem Hohlraum;
- Figur 4: schematisch eine Draufsicht auf einen Innenraum, umgeben von einer tragenden Struktur mit Aussenisolation, Innenwand und dazwischen angeordneten Fluid leitenden Hohlräumen;
- Figur 5: eine schematische Ansicht eines Fertigelementes mit Aussenisolation und Fluid leitendem Hohlraum mit Eintritts- und Austrittsöffnung;
- Figur 6: schematisch eine Vorrichtung zur Temperierung von Luft, welche über Luftzuführkanäle mit drei separaten Innenräumen verbunden ist.
- Figuren 7a-7e: verschieden ausgestaltete Sanierungsbausteine mit Fluid leitenden Hohlräumen;
- Figur 8a, 8b: beispielhafte Verläufe von Hohlräumen im Sanierungsbaustein.

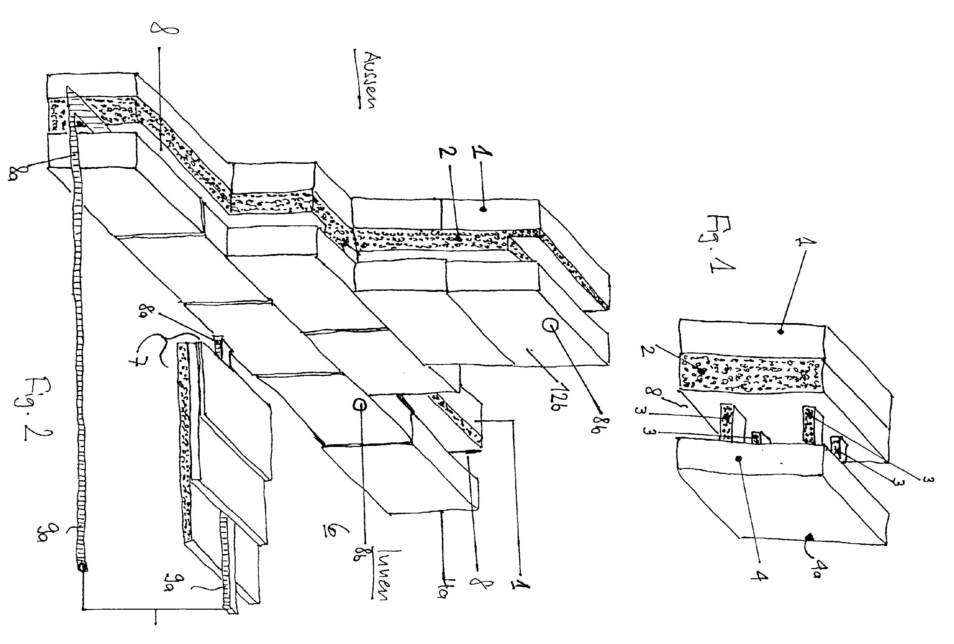

Figur 1 zeigt einen schematischen Schnitt durch die Wand eines Hauses, welche eine Aussenwand 1, eine Isolation 2, mehrere Distanzhalter 3 und eine Temperierfläche 4 mit Innenoberfläche 4a umfasst. Unter Temperierfläche 4 wird nachfolgend immer der gesamte Körper verstanden, wobei dieser Körper zum Innenraum 6 hin als Oberfläche eine Wand 4a ausbildet. Zwischen der Isolation 2 und der Temperierfläche 4 ist mit Hilfe der Distanzhalter 3, welche mit der Aussenwand 1 und der Temperierfläche 4 beispielsweise fest verbunden sind, ein definierter Hohlraum 8 ausgebildet, durch welchen temperierte Luft geleitet wird, um die Temperierfläche 4 entweder zu erwärmen oder zu kühlen, und um dadurch die Temperatur eines Innenraumes 6 zu beeinflussen. Die Isolation 2 besteht beispielsweise aus Schaumglas welches dampfdiffusionsdicht ist, sodass der Hohlraum 8 vor eindringender Feuchtigkeit geschützt ist. Die Breite des Hohlraumes 8 beziehungsweise der Abstand zwischen Temperierfläche 4 und Isolation 2 beträgt beispielsweise zwischen 0.5 und 10 cm.

Figur 2 zeigt schematisch die Wand eines Hauses, welche wiederum eine Aussenwand 1, eine Isolation 2 und eine Vielzahl von aufeinandergeschichteten Bausteinen 12b umfasst. Der Verbund der Bausteine 12b bildet die Temperierfläche 4, welche gegen den Innenraum 6 hin die Wand 4a ausbildet. Zwischen der Temperierfläche 4 und der Isolation 2 ist ein Hohlraum 8 ausgebildet, wobei die Isolation 2 vorstehende Abschnitte aufweist, welche die breite des Hohlraumes 8 festlegen. Die Temperierfläche 4 weist unten zwei Eintrittsöffnungen 8a auf, und weist zudem zwei Austrittsöffnungen 8b auf. Das Fluid, die temperierte Luft, wird über im Boden 7 angeordnete Zuleitungen 9a den Eintrittsöffnungen 8a zugeleitet, bewegt sich innerhalb des Hohlraumes 8 nach oben, und strömt über die Austrittsöffnungen 8b wieder in den Innenraum 6. Während dem Durchströmen erwärmt oder kühlt die temperierte Luft insbesondere die Temperierfläche 4, sodass der Innenraum 6 über die Temperatur der Temperierfläche erwärmt oder gekühlt wird. Die temperierte Luft strömt über die Austrittsöffnungen 8b zudem in den Innenraum 6, sodass dieser über die einströmende Luft nochmals erwärmt oder gekühlt wird.

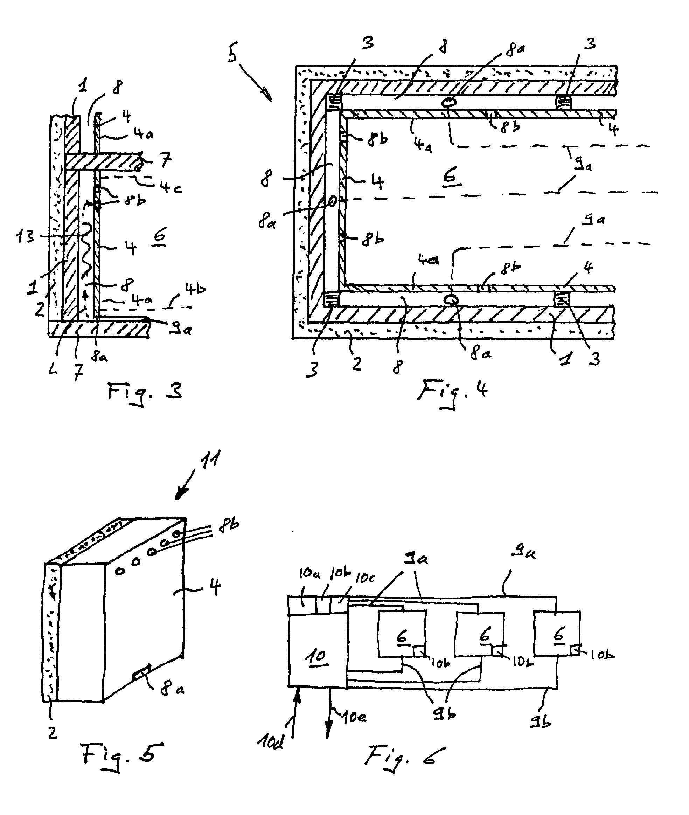

Figur 3 zeigt in einem Längsschnitt zwei Stockwerke eines Hauses, mit Geschossflächen 7, einer tragenden Aussenwand 1 sowie eine Aussenisolation 2. Die Isolation 2 besteht beispielsweise aus Polyurethan und ist derart dick gewählt, dass sich der Taupunkt innerhalb der Isolation 2 befindet. Im Innern des Hauses ist eine Wand 4a derart beabstandet zur Aussenwand 1 angeordnet, dass sich zwischen der Aussenwand 1 und der die Temperierfläche 4 bildenden Wand 4 ein Hohlraum 8 bildet. Der Hohlraum 8 weist unten eine Eintrittsöffnung 8a auf, welcher über eine Leitung 9a temperierte Luft zuführbar ist, und welche als Luftstrom L, vorteilhafterweise über ein Flusswiderstandsmittel 13, zur Austrittsöffnung 8b strömt. Die Temperierfläche 4 weist zudem zwei Austrittsöffnungen 8b auf, welche eine Fluid leitende Verbindung zwischen dem Hohlraum 8 und dem Innenraum 6 bilden. Die Leitung 9 sowie die Eintrittsöffnung 8a könnte auch an der Decke angeordnet sein, und die Austrittsöffnungen 8b im Innenraum 6 angeordnet sein, sodass die Luft L im Hohlraum 8 von oben nach unten strömt.

Figur 4 zeigt in einer Draufsicht schematisch einen Innenraum des in Figur 3 dargestellten Hauses. Die tragende Aussenwand 1 ist aussen von einer Aussenisolation 2 umgeben. Zwischen der Aussenwand 1 und den Wänden 4a sind Distanzhalteelemente 3 angeordnet, welche die Breite jedes Hohlraumes 8 festlegen. In einer bevorzugten Ausgestaltung sind die Distanzhalteelemente 3 derart ausgestaltet und angeordnet, dass jeder der drei dargestellten Hohlräume 8 für sich luftdicht oder im wesentlichen luftdicht ausgestaltet ist, sodass jeder Hohlraum 8 ein luftdichter Behälter bildet, natürlich mit Ausnahme der Eintritts- und Austrittsöffnungen 8a, 8b. Diese Luftdichtigkeit wird beispielsweise durch die Verwendung von Kautschuk, Kork oder auch einem Kunststoff erreicht.

Jeder Hohlraum 8 wird über eine separate Zuleitung 9a mit Luft versorgt. Im dargstellten Ausführungsbeispiel ist die Wand 4a als Temperierfläche 4 ausgestaltet. Anstelle oder zusätzlich zur Wand 4a könnte natürlich auch der Boden 4b und/oder die Decke 4c eine Temperierfläche 4 mit einem dahinter angeordneten Hohlraum 8 aufweisen, um mit Hilfe von Luft diese Temperierflächen 4 zu temperieren, und die Luft, analog zur Wand 4a, über eine Austrittsöffnung 8b in den Innenraum 6 zu leiten.

Die erfindungsgemässe Anordnung, und somit auch die in den Figuren 3 und 4 dargestellte Anordnung weist folgende Vorteile auf:
- Die Hohlräume 8 sind sehr kostengünstig herstellbar. Insbesondere bei einem Neubau ist eine im wesentlichen luftdichte Aussenhülle sowie die Erstellung der Hohlräume einfach und kostengünstig möglich.
- Die Temperierflächen 4, welche als Wände 4a, Böden 4b oder Decke 4c ausgestaltet sind, werden erwärmt (oder gekühlt). Die erwärmte Temperierfläche 4 hat ein sehr angenehmes Raumklima zur Folge, da der Innenraum 6 kaum kalte (oder warme) Begrenzungsflächen aufweist.
- Die einzelnen Hohlräume 8 könnten getrennt mit Luft beschickt werden, sodass die Temperatur der jedem Hohlraum zugeführt Luft individuell eingestellt werden kann. Zudem kann für jeden Raum 6 eine individuelle Raumtemperatur und/oder eine individuelle Luftaustauschrate vorgegeben werden.
- Da die Hohlräume 8 über die Eintrittsöffnung 8a in den Innenraum 6 münden finden ständig eine Umwälzung der Luft im Innenraum 6 statt, was insbesondere bei hochdicht ausgestalteten Häusern von zentraler Bedeutung ist.
- Die Strömungsgeschwindigkeit der über die Zuleitung 9a zugeführten Luft ist vorzugsweise einstellbar, wobei zudem durch eine geschickte Anordnung, Ausgestaltung und Anzahl der Austrittsöffnungen 8b die Strömungsgeschwindigkeit im Innenraum 6 derart beeinflusst werden kann, dass diese nicht als unangenehm empfunden wird und kaum oder nicht spürbar ist.
- Aufgrund der Zuführung der Luft vom Hohlraum 8 in den Innenraum 6 ist ein genügend hoher Luftwechsel sowie eine schnelle Temperierung des Raumes möglich, wobei die Wärme oder Kälte zudem in der Temperierfläche 4 bespeichert wird, und dadurch langfristig wirken kann.
- Die Belüftung des Hohlraumes 8 gewährleitstet dass sich darin kein Kondenswasser bildet, oder dass dieses wegen der durch den Hohlraum 8 strömenden Luft nur kurzfristig vorhanden ist. Ein Feuchteschaden im Bereich von Aussenwand 1, Isolation 2 und Hohlraum 8 ist somit ausgeschossen.
- Die Anordnung kann äusserst kostengünstig gebaut werden, da die Hohlräume 8 sehr günstig herstellbar sind, und da als Zuleitung 9a beispielsweise kostengünstige Kunststoffrohre verwendbar sind, sodass, beispielsweise im Vergleich zu einer Bodenheizung, die Installationskosten der Zuleitungen 9a äusserst günstige sind.
- Die Anordnung ist hervorragend geeignet zur Sanierung bestehender Gebäude, weil es einerseits sehr einfach und kostengünstig ist, die bestehenden Wände eines Innenraumes 6 mit einer Temperierfläche 4 zu versehen, hinter welcher ein Hohlraum 8 ausgebildet ist. Zudem sind die Zuleitungen 9a sehr kostengünstig zu verlegen. Ein zusätzlicher, wichtiger Vorteil ist darin zu sehen, dass diese Anordnung gewährleistet, dass sich im Innenraum 8 kein Kondenswasser ansammelt.
- Die Anordnung ermöglicht zudem Neubauten sehr kostengünstig zu erstellen. Werden beispielsweise die Distanzhalter 3 zugleich als Träger ausgestaltet, so kann die Aussenwand 1 sehr dünn ausgestaltet sein, da diese nun noch eine bezüglich dem Hohlraum 8 dichtenden Funktion gewährleisten muss, jedoch keine Stützfunktion übernehmen muss.
- Dieselbe Anordnung ist für jegliche Art von Häusern geeignet, beispielweise für Wohnhäuser, Lagerhäuser, Einkaufszentren, oder Bürogebäude. Die Anordnung ist zudem für Bauten in jeder Klimazonen geeignet. Im kühlen Norden ist üblicherweise nur eine Beheizung der Hohlräume im Winter erforderlich. In gemässigten Zonen ist im Winter eine Beheizung erforderlich und im Sommer eine Kühlung erwünscht. Zudem kann es erwünscht sein in der Übergangszeit die Innenräume mit nicht temperierter Aussenluft zu versorgen. In südlichen, heissen Zonen ist nur eine Kühlung erforderlich.
- Die Anordnung wird vorteilhafterweise mit einer zentrale Luftaufbereitung betrieben, sodass die Innenluft des gesamten Hauses nicht nur temperierbar ist, sondern auch kostengünstig noch weiter behandelt werden kann, indem die Luft beispielsweise entfeuchtet oder befeuchtet, von Partikeln oder Gerüchen gereinigt, oder mit Zusatzstoffen wie Ionen oder Düften versehen wird. Die Temperierung der Luft könnte jedoch auch durch eine innerhalb des Hohlraumes 8 angeordneten Vorrichtung erfolgen.
- Die Anordnung ermöglicht über die zentrale Luftaufbereitung eine Wärme- oder Kälterückgewinnung aus der verbrauchten Luft. Eine Klimaanlage kann einfach verwendet werden.

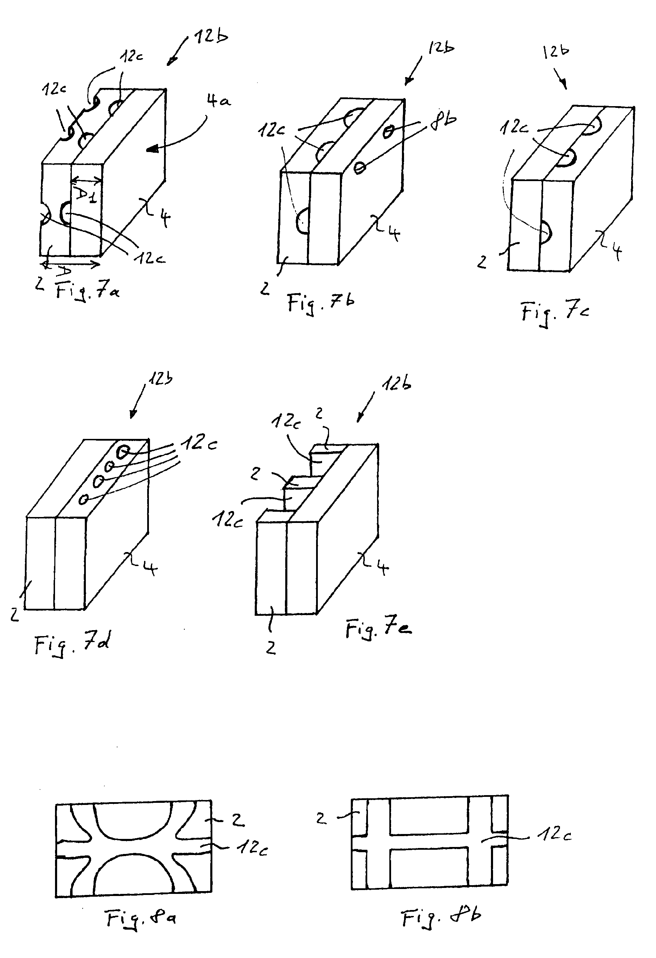

Figur 6 zeigt schematisch die Versorgung mehrerer Räume 6 eines Hauses mit temperierter Luft. Die zu temperierenden Räume sind über eine Zuleitung 9a und eine Ableitung 9b mit einer Vorrichtung 10 zur Temperierung von Luft verbunden. Die Vorrichtung 10 kann als Heiz- und/oder Kühlvorrichtung ausgestaltet sein, um den Räumen 6 beheizte, gekühlte oder nicht temperaturveränderte Luft zuzuführen. Die Vorrichtung 10 umfasst eine Regelvorrichtung 10a, Sensoren 10b und Aktuoren 10c, beispielsweise ansteuerbare Ventile. Vorzugsweise ist in jedem Raum 6 ein Temperatursensor 10b und ev. ein Feuchtigkeitssensor angeordnet, sodass zumindest die Temperatur jedes Raums 6 individuell einstellbar ist, indem die Luftzuführung entsprechend angesteuert wird. Die Vorrichtung 10 ist vorzugsweise Teil eines geschlossenen Luftkreislaufes, und umfasst zudem einen Lufteinlass 10d um Aussenluft anzusaugen, sowie einen Luftauslass 10e, um verbrauchte Luft an die Umwelt abzugeben. Die Vorrichtung umfasst vorzugsweise auch einen Wärme- oder Kältetauscher, um der über den Luftauslass 10e abgegebenen Luft Wärme oder Kälte zu entziehen. Die Vorrichtung 10 wird beispielsweise derart betrieben, dass die Luft im Raum 6 zwischen 2 und 10 mal pro Stunde umgewälzt wird, vorzugsweise etwa 4.5 mal. Nebst der Temperatur ist es zudem auch möglich den Luftaustausch pro Stunde für jeden versorgen Raum 6 individuell vorzugeben, oder beispielsweise temporär zu erhöhen, wenn beispielsweise in einem Raum geraucht wird, und daher ein erhöhter Frischluftbedarf erforderlich ist. Die Temperatur und der Luftaustausch bzw. die Luftumwälzung kann unabhängig voneinander vorgegeben werden. Dies ermöglich eine vorteilhafte Innenluftqualität und insbesondere eine hohe Lufthygiene, da die Luft jedes Raumes 6 ständig ausgetauscht wird, und nicht wie bei konventionellen Heizungen nur innerhalb des Raumes 6 umgewälzt wird. Die erfindungsgemässe Anordnung gewährleistet eine ausgezeichnete Hygiene, verhindert dass sich leichtflüchtige organische Substanzen wie Formaldehyd oder Radon, lungengängige Stäube, Pilze oder Bakteriensporen im Raum 6 ansammeln, uns gewährleistet daher ein gesundes Wohnklima, welches insbesondere auch für Allergiker geeignet ist. Um innerhalb des Raumes 6 eine geringe Luftströmungsgeschwindigkeit zu erreichen kann einerseits die Luft mit einer entsprechend angepassten Geschwindigkeit dem Hohlraum 8 zugeleitet werden, und können zudem die Austrittsöffnungen 8b entsprechend gestaltet sein. Die Austrittsöffnungen 8b können an frei wählbaren Orten, in frei wählbarer Anzahl und mit frei wählbarer Geometrie in den Innenraum 6 münden. Zudem besteht mit einer Vorrichtung 10, welche eine individuelle Luftbefeuchtung zulässt die Möglichkeit jeden Innenraum 6 über die Zuleitung 9a mit einer individuell befeuchteten Luft zu versorgen, sodass auch die relative Luftfeuchtigkeit für jeden Innenraum 6 individuell vorgebbar ist.

Figur 5 zeigt schematisch ein Fertigbauelement 11 mit einem Kastenförmigen Hohlkörper mit Temperierfläche 4, wobei die Eintrittsöffnung 8a und die Austrittsöffnungen 8b und einem innerhalb des Hohlkörpers befindlichen Hohlraum verbunden sind, wobei der Hohlraum jede mögliche Geometrie aufweisen kann. Dieses Fertigbauelement 11 kann zudem noch mit einer Isolation 2 versehen sein.

Die Figuren 7a bis 7e zeigen unterschiedlich ausgestaltete Sanierungsbausteine 12b, welche insbesondere zur Sanierung von bestehenden Gebäuden geeignet sind, um in bestehenden Innenräumen 6 neu einen Hohlraum 8 mit Eintrittöffnungen 8a und Austrittsöffnungen 8b zu bilden, welche über Zu- und Ableitungen 9a,9b mit temperierter Luft versorgbar sind. Figur 7a zeigt einen Sanierungsbaustein 12b mit einer Temperierfläche 4 und einem Isolationsmaterial 2, in welchem Fluid leitende Ausnehmungen 12c eingelassen sind, durch welche die temperierte Luft strömt. Die Figuren 8a und 8b zeigen Ausführungsbeispiele für den Verlauf der Ausnehmungen 12c, wie diese in den Sanierungsbausteinen gemäss den Figuren 7a, 7b und 7c verlaufen könnten. Der Sanierungsbaustein gemäss Fig. 7b weist Austrittsöffnungen 8b auf, welche mit den Ausnehmungen 12c eine Fluid leitende Verbindung bilden. Bei den Sanierungsbausteinen gemäss den Figuren 7c und 7d sind die Ausnehmungen 12c in dem die Temperaturfläche 4 bildenden Stein angeordnet. Im Sanierungsbaustein 12b gemäss Figur 7e ist die Isolation 2 schmal und streifenförmig ausgestaltet, sodass breite, vertikal verlaufende Ausnehmungen ausgebildet sind. Abhängig vom bestehenden Bauwerk kann es sich als vorteilhaft erweisen, zur bestehenden Wand nur eine Isolation 2 anzuordnen, oder zur bestehenden Wand hin ebenfalls eine Ausnehmung 12c vorzusehen, wie in Figur 7a und Figur 7e dargestellt, um eine Ansammlung von Kondenswasser zu verhindern. Die Sanierungsbausteine 12 werden, wie in Figur 2 dargestellt, vorzugsweise gegenseitig versetzt zu einem Verbund aufgeschichtet, wobei der Hohlraum, mit Ausnahme der Eintritts- und Austrittsöffnungen 8a, 8b, gegen den Innenraum 6 hin vorzugsweise luftdicht ausgestaltet ist. Der die Wärmefläche 4 ausbildende Teil des Sanierungsbausteines 12b besteht vorzugsweise aus einem Material der Gruppe Stein, Beton, Porenbeton, Blähton, Holz, Karton, Gips, Keramik oder Kunststoff.
Der Sanierungsbaustein 12b ist vorzugsweise sehr dünn ausgestaltet, und weist insgesamt eine Dicke D von beispielsweise 1 bis 6 cm auf, und vorzugsweise eine Dicke D von etwas 2 cm. Dabei kann die Temperierfläche 4 auch sehr dünn ausgestaltet sein, und eine Dicke D1 zwischen 0.5 bis 2 cm aufweisen. Der Sanierungsbaustein 12b weist beispielsweise eine Oberfläche 4a von 60 x 45 cm auf.

Es kann sich als vorteilhaft erweisen innerhalb des Hohlraumes 8, wie in Figur 3 schematisch dargestellt, Flusswiderstandsmittel 13 anzuordnen, um die Fliessgeschwindigkeit der Luft innerhalb des Hohlraumes 8 zu vermindern, und/oder die Wärmeabgabe von der durchströmenden Luft an die Temperierfläche 4 zu erhöhen. Diese Flusswiderstandsmittel 13 können in einer Vielzahl von Ausführungsmitteln ausgestaltet sein, und beispielsweise auch eine Oberflächenstruktur ähnlich eines Eierkartons aufweisen.

## Patentansprüche

1. Anordnung zur Temperierung sowie Be- und Entlüftung von Innenräumen (6) eines Hauses (5) mittels temperierter Luft, wobei die Innenräume eine als Wand (4a) und/oder Boden (4b) und/oder Decke (4c) ausgestaltete Temperierfläche (4) aufweisen, hinter welcher ein Fluid leitender Hohlraum (8) ausgebildet ist, wobei der Fluid leitende Hohlraum (8) zumindest eine Eintrittsöffnung (8a) sowie zumindest eine Austrittsöffnung (8b) für die temperierte Luft aufweist und ansonst abgedichtet ausgestaltet ist, um die durch die Eintrittsöffnung (8a), den Fluid leitenden Hohlraum und die Austrittsöffnung (8b) strömende temperierte Luft derart zu leiten, dass die Temperatur der Temperierfläche (4) beeinflusst wird, und wobei die Austrittsöffnung (8b) in den Innenraum (6) mündet.

2. Anordnung gemäss Anspruch 1, **dadurch gekennzeichnet, dass** der Fluid leitende Hohlraum (8), mit Ausnahme der Eintritts- und Austrittsöffnung (8a, 8b), luftdicht ausgestaltet ist.

3. Anordnung nach einem der vorhergehenden Ansprüche, **dadurch gekennzeichnet, dass** die Austrittsöffnung (8b) innerhalb der Temperierfläche (4) angeordnet ist.

4. Anordnung nach einem der vorhergehenden Ansprüche, **dadurch gekennzeichnet, dass** der Innenraum (6) eine Mehrzahl von gegenseitig abgedichteten, Fluid leitenden Hohlräumen (8) mit Eintrittsöffnungen (8a) und Austrittöffnungen (8b) aufweist.

5. Anordnung nach einem der vorhergehenden Ansprüche, **dadurch gekennzeichnet, dass** Zuführ- und Steuermittel (9,10) derart angeordnet sind, dass jeder Fluid leitende Hohlraum (8) separat ansteuerbar mit temperierter und/oder befeuchteter Luft versorgbar ist.

6. Anordnung nach einem der vorhergehenden Ansprüche, **dadurch gekennzeichnet, dass** die Anordnung als Fertigbauelement (11) ausgestaltet ist.

7. Anordnung nach einem der Ansprüche 1 bis 5, **dadurch gekennzeichnet, dass** das Haus eine Innen- und eine Aussenwand (1,4) aufweist und ein Dichtungsmittel (3) derart angeordnet ist, dass zwischen der Innen- und Aussenwand (1,4) eine Mehrzahl abgedichteter, Fluid leitender Hohlräume (8) ausgebildet sind.

8. Anordnung nach einem der Ansprüche 1 bis 5, **dadurch gekennzeichnet, dass** der Fluid leitende, abgedichtete Hohlraum (8) durch Sanierungsmittel (12), insbesondere eine Sanierungswand (12a) oder eine Mehrzahl von Sanierungsbausteinen (12b) bebildet ist, welche vor einer bestehenden Wand (1) angeordnet sind, und welche derart ausgestaltet sind, dass sie sowohl einen Fluid leitenden Hohlraum (8) als auch eine Temperierfläche (4) ausbilden.

9. Verfahren zur Temperierung sowie Be- und Entlüftung von Innenräumen (6) eines Hauses mittels temperierter Luft indem die Luft erwärmt und/oder gekühlt wird, indem diese temperierte Luft einem abgedichteten Hohlraum (8) zugeführt und im Hohlraum (8) über eine Temperierfläche (4) geleitet wird, welche eine Wand (4a) und/oder Boden (4b) und/oder Decke (4c) des Innenraumes (6) bildet, und indem die gesamte temperierte Luft danach in den Innenraum geleitet wird.

10. Verfahren nach Anspruch 9, **dadurch gekennzeichnet, dass** die Temperatur und/oder die Fliessgeschwindigkeit und/oder die Luftmenge der den Hohlräumen (8) zugeführten Luft zumindest für einige Hohlräume (8) individuell vorgebbar ist.

11. Verfahren nach Anspruch 9 oder 10, **dadurch gekennzeichnet, dass** das Haus und/oder jeder Innenraum (6) eine Mehrzahl von Temperierflächen (4) mit zugeordneten, abgedichteten Fluid leitenden Hohlräumen (8) aufweist, und dass die Temperatur und/oder die Fliessgeschwindigkeit und/oder die Luftmenge der jedem Fluid leitenden Hohlraum (8) zugeführten Luft individuell vorgebbar ist.

12. Haus umfassend eine Mehrzahl von Anordnungen gemäss einem der Ansprüche 1 bis 8, umfassend eine Vorrichtung (10) zur Temperierung von Luft sowie umfassend Luftzuführkanäle (9a), welche eine Fluid leitende Verbindung zwischen der Vorrichtung (10) zur Temperierung sowie den Eintrittsöffnungen (8a) der Fluid leitenden Hohlräume (8) bilden, sowie umfassend eine Regelvorrichtung (10a), Sensoren (10b) und Aktuoren (10c), um die Temperatur und/oder die Fliessgeschwindigkeit und/oder die Luftmenge und/oder die Luftfeuchtigkeit der den Fluid leitenden Hohlräumen (8) zugeführten temperierten Luft insbesondere individuell zu beeinflussen.

13. Sanierungsmittel (12) zur nachträglichen Erstellung einer Anordnung gemäss einem der Ansprüche 1 bis 5 oder 8, umfassend eine Temperierfläche (4) bestehend aus einem Material der Gruppe Stein, Beton, Porenbeton, Blähton, Holz, Karton, Gips, Keramik, Kunststoff, sowie umfassend Ausnehmungen (12c), welche derart angeordnet und ausgestaltet sind, dass das Sanierungsmittel (12), insbesondere im Verbund angeordnet, einen Fluid leitenden Hohlraum (8) mit Eintritts- und Austrittsöffnung (8a, 8b) ausbildet, wobei der Hohlraum (8) entweder vom Sanierungsmittel (12) an sich, oder vom Sanierungsmittel (12) in Kombination mit einer Wand ausgebildet ist.

14. Sanierungsmittel (12) nach Anspruch 13, **dadurch gekennzeichnet, dass** dieses auf der Rückseite des die Temperierfläche (4) ausbildenden Materials angeordnete Abstandhaltemittel (3) aufweist, welche über die Rückseite vorstehen.

15. Sanierungsmittel (12) nach Anspruch 13, **dadurch gekennzeichnet, dass** dieses auf der Rückseite des die Temperierfläche (4) ausbildenden Materials eine Schicht aus Isolationsmaterial (2) aufweist.

16. Sanierungsmittel (12) nach Anspruch 15, **dadurch gekennzeichnet, dass** dieser Fluid leitende Ausnehmungen (12c) oder Kanäle (12c) aufweist, welche derart angeordnet und ausgestaltet sind, dass diese bei in einem Verbund angeordneten Sanierungsmitteln (12) einen gemeinsamen, Fluid leitenden Hohlraum (8) ausbilden.

17. Sanierungsmittel (12) nach einem der Ansprüche 13 bis 16, **dadurch gekennzeichnet, dass** dieses Fluid leitenden Ausnehmungen (12c) oder Kanäle (12c) in einer Schicht aus wasserdampfdiffusionsdichtem Material (2) ausgebildet sind.

18. Sanierungsmittel (12) nach einem der Ansprüche 13 bis 17, **dadurch gekennzeichnet, dass** dieses als ein Sanierungsbaustein (12b) ausgestaltet ist.

19. Herstellung von Kanälen und Luftebenen zwischen mindestens einem Schaumglasrohling (2) als tauwasserfreie Fixierschicht, und mindestens einer auf Abstand gebrachten Beplankung (4), wobei die Beplankung aus unterschiedlichen Materialien gefertigt sein kann, jedoch vorzugsweise aus geologisch monolithischen Rohstoffen besteht, und wobei die Längen und Breiten der Kanäle und Luftebenen frei wählbar sind, und durch Distanz- und Fixierlager entstehen.

20. Herstellung von Distanz- und Fixierlager zur Größenbestimmung von Kanälen und Luftebenen und zur Abstandsbestimmung zwischen dem Schaumglasrohling (2) und der Beplankung (4), wobei die Abmessungen und die Form der Distanz- und Fixierlager (3) frei wählbar und variabel sind, und wobei die Form rechteckig, quadratisch, rund oder elliptisch sein kann oder auch andere Geometrien aufweist, wobei die Maße und Formen sich nach Qualität und Menge des benötigten Luftvolumens und der Zusammensetzung der benötigten Atmosphäre richten, und wobei die Distanz- und Fixierlagen vorzugsweise aus armiertem Schaumglas bestehen, wobei der Baudämmstein aus mindestens einem Schaumglasrohling (2) und mindestens einer Beplankung (1) bestehen kann, oder mehreren Beplankungen (1,4), die vorzugsweise aus Porenbeton bestehen, wobei die Schichtenfolge grundsätzlich Porenbeton (1) mit Schaumglas (2) in fester Verbindung ist und die Befestigung einer weiteren Beplankung auf Abstand (4), mittels der genannten Distanz- und Fixierlager erfolgt.

21. Herstellung eines Elementes nach Patentanspruch 20, jedoch in der Schichtenfolge, Beplankung (1) mit Schaumglas (2) als tauwasserfreie Fixierschicht und Beplankung (4), jedoch ohne Distanz- und Fixierlager (3), aber untereinander in fester Verbindung, wobei das Schaumglas (2) immer im mittleren Bereich zwischen den beiden äußeren Beplankungen fest eingebunden ist.

22. Herstellung eines Elementes in der Schichtenfolge, Beplankung (1) vorzugsweise aus Porenbeton, mit einer tauwasserfreien Fixierschicht (2) vorzugsweise bestehend aus Schaumglas, wobei beide Schichten fest miteinander verbunden sind.

23. Herstellung eines Elementes unter Verwendung der Beplankung (4), vorzugsweise aus Porenbeton, und der tauwasserfreien Fixierschicht (2), vorzugsweise aus Schaumglas, wobei die Beplankung (4) und die Fixierschicht (2) durch die Distanz- und Fixierlager (3) auf frei wählbaren Abstand gehalten werden, wobei die Distanz- und Fixierlager vorzugsweise aus armiertem Schaumglas oder aus der Gruppe Stein, Beton, Porenbeton, Blähton, Holz, Karton, Gips, Kunststoff, sowie umfassend Ausnehmungen bestehen.

24. Herstellung eines Elementes unter Verwendung von mindestens zwei geologisch monolithischer Beplankungen (1,4), vorzugsweise aus Porenbeton, die durch Distanz- und Fixierlager (3) auf Abstand fixiert werden, die vorzugsweise aus armiertem Schaumglas bestehen.
